# EUROPÄISCHE PATENTANMELDUNG

(11) **EP 4 335 734 A1**
(43) Veröffentlichungstag der Anmeldung: **13.03.2024**
(21) Anmeldenummer: 22204714.4
(22) Anmeldetag: 31.10.2022
(51) Int. Cl.: B62J 43/20, B62M 6/90, B62H 5/00

(54) **ELEKTROFAHRRAD MIT ANTRIEBSAKKU UND ANTRIEBSAKKUANORDNUNG FÜR EIN ELEKTROFAHRRAD**

(30) Priorität: 07.09.2022 DE 202022105039 U
(71) Anmelder: Biketec GmbH, 4950 Huttwil (CH)
(72) Erfinder: HE, Lingfei, 63071 Offenbach am Main (DE); ZHANG, Chuanyu, 201400 Shanghai (CN)
(74) Vertreter: Isarpatent

(57) **Zusammenfassung**

Die Erfindung betrifft ein Elektrofahrrad mit einem Fahrradrahmen und einem an diesem festlegbaren Antriebsakku, wobei eine Primärverriegelung des Antriebsakkus am Fahrradrahmen mittels eines Schlosses erfolgt, wobei der Antriebsakku nach Betätigung des Schlosses in eine Zwischenposition bewegbar ist, und mit einer Sekundärverriegelung (16) welche den Antriebsakku in der Zwischenposition fixiert, dadurch gekennzeichnet, dass die Sekundärverriegelung (16) zur Entnahme des Antriebsakkus mittels einer Relativbewegung des Antriebsakkus relativ zum Fahrradrahmen in eine Entnahmeposition betätigbar ist.

## Beschreibung

Die vorliegende Erfindung betrifft ein Elektrofahrrad gemäß dem Oberbegriff des Anspruchs 1 sowie eine Antriebsakkuanordnung für ein Elektrofahrrad gemäß dem Oberbegriff des Anspruchs 24.

Aus dem Stand der Technik sind Elektrofahrräder, wie beispielsweise E-Bikes, mit elektrischer Motorunterstützung bekannt, welche einen zumindest abschnittsweise im Fahrradrahmen untergebrachten, entnehmbaren Antriebsakku aufweisen. Der Antriebsakku ist beispielsweise in einer rahmenseitigen Halterung eines Unterrohrs des Fahrradrahmens befestigbar. Hierzu wird der Antriebsakku von unten oder gemäß einer alternativen Ausführung von oben in die rahmenseitige Akkuhalterung eingesetzt, wobei eine Primärverriegelung des Antriebsakkus am Rahmen mittels eines Schlosses erfolgt.

Zur Entnahme des Antriebsakkus vom Fahrradrahmen wird das Schloss vom Fahrer bspw. mittels eines Schlüssels betätigt und der Antriebsakku in eine Zwischenposition bewegt. In der teilweise ausgeschwenkten Zwischenposition ist der Antriebsakku mittels eines als Sekundärverriegelung vorgesehenen, einen Rasthaken aufweisenden Zweitriegels gegen herausfallen gesichert. Anschließend wird der Antriebsakku vom Fahrer mit einer Hand gehalten und der Zweitriegel mit der anderen Hand betätigt, um den Antriebsakku vollständig zu entriegeln und entnehmen zu können.

Nachteilig bei dieser Lösung ist, dass der Antriebsakku zu dessen Entnahme vom Fahrer mit einer Hand gehalten und mit der zweiten Hand der Zweitriegel betätigt werden muss. Auch ist das Vorsehen eines Zweitriegels fertigungstechnisch aufwendig.

Der Erfindung liegt daher die Aufgabe zugrunde, ein Elektrofahrrad mit einem Antriebsakku und eine Antriebsakkuanordnung für ein Elektrofahrrad bereitzustellen, welche eine schnelle, einfache Montage und Demontage des Antriebsakkus ermöglicht.

Diese Aufgabe wird durch ein Elektrofahrrad mit der Merkmalskombination des Anspruchs 1 sowie mittels einer Antriebsakkuanordnung für ein Elektrofahrrad gemäß Anspruch 24 gelöst.

Das erfindungsgemäße Elektrofahrrad hat einen Fahrradrahmen und einen an diesem festlegbaren Antriebsakku, wobei eine Primärverriegelung des Antriebsakkus am Rahmen mittels eines Schlosses erfolgt, wobei der Antriebsakku nach Betätigung des Schlosses in eine Zwischenposition bewegbar ist, und mit einer Sekundärverriegelung welche den Antriebsakku in der Zwischenposition fixiert. Erfindungsgemäß ist die Sekundärverriegelung zur Entnahme des Antriebsakkus mittels einer Relativbewegung des Antriebsakkus relativ zum Fahrradrahmen in eine Entnahmeposition betätigbar. Der Antriebsakku ist nun vollständig entriegelt und kann vom Fahrradrahmen entnommen bzw. abgenommen werden. Vorteilhaft ist hierbei, dass der Antriebsakku vom Fahrer mit einer Hand entnehmbar ist. Mit der zweiten Hand kann beispielsweise das Fahrrad während der Akkuentnahme gehalten werden. Ein fertigungstechnisch aufwendiger Zweitriegel ist nicht erforderlich.

Als besonders vorteilhaft hat es sich erwiesen, wenn die Sekundärverriegelung mittels eines in einer Führungsbahn bzw. einer Führungskulisse geführten Sekundärriegels erfolgt.

Gemäß einer bevorzugten Ausführung des Elektrofahrrads erfolgt die Entriegelung der Sekundärverriegelung nach Betätigung der Primärverriegelung mittels einer Bewegung des Antriebsakkus entgegen seiner Entnahmerichtung. Hierbei wird der Antriebsakku vom Fahrer vorzugsweise aus der Zwischenstellung, d. h. nach Entriegelung des Schlosses, zumindest teilweise zurück in den Fahrradrahmen bewegt. Dadurch ist die Sekundärverriegelung entriegelt und der Antriebsakku kann anschließend entnommen werden.

Bei einer alternativen Ausführungsform der Erfindung erfolgt die Entriegelung der Sekundärverriegelung nach Betätigung der Primärverriegelung durch das Schloss mittels einer Bewegung des Antriebsakkus in dessen Entnahmerichtung. Hierbei zieht der Fahrer vorzugsweise am Antriebsakku, überwindet dabei einen Haltewiderstand beispielsweise eines Rasthakens, Kugelschnappers oder dgl. und entnimmt den Antriebsakku.

Die Führungsbahn ist vorzugsweise als Führungsschlitz oder taschenförmige Nut ausgebildet. Die Führungsbahn ist bei einer erfindungsgemäß bevorzugten Variante als Führungsschlitz in einer am Antriebsakkugehäuse montierten Endplatte vorgesehen. Die Endplatte ist vorzugsweise stirnseitig mit dem Antriebsakkugehäuse verschraubt.

Gemäß eines weiteren Ausführungsbeispiels ist die Führungsbahn rahmenseitig vorgesehen, d. h. dem Fahrradrahmen zugeordnet.

Der Sekundärriegel ist vorzugsweise als ein zumindest abschnittsweise zylinderförmiger Verriegelungsstift ausgeführt.

Erfindungsgemäß bildet die Führungsbahn bevorzugt bistabile Positionen für den Sekundärriegel aus. Vorzugsweise ist die Führungsbahn als Herzbahn ausgebildet.

Vorzugsweise weist die Führungsbahn eine untere Endlage und eine obere Endlage für den Sekundärriegel auf.

Der Sekundärriegel befindet sich bei vollständig verriegeltem, in seiner Betriebsstellung angeordnetem Antriebsakku in der unteren Endlage der Führungsbahn. Während der Montage eines entnommenen Antriebsakkus wird der Sekundärriegel entlang der Führungsbahn in diese untere Endlage bewegt.

Der Antriebsakku ist nach dem Öffnen des Schlosses vorzugsweise in eine Zwischenposition bewegt, in welcher sich der Sekundärriegel in einer oberen Endlage der Führungsbahn befindet.

Der Sekundärriegel ist mittels einer Bewegung des Antriebsakkus relativ zu der Zwischenposition vorzugsweise in eine Entnahmeposition der Führungsbahn bewegbar.

Als besonders vorteilhaft hat es sich hierbei erwiesen, wenn der Sekundärriegel aufgrund einer Kraftbeaufschlagung, vorzugsweise mittels der Kraft zumindest eines elastischen Elements, besonders bevorzugt einer Feder, seitlich in der Führungsbahn bewegbar ist und einen Entnahmebahnabschnitt der Führungsbahn erreicht. Der Antriebsakku ist nach dem Öffnen des Schlosses vorzugsweise in eine Zwischenposition bewegt, in welcher sich der Sekundärriegel in einer oberen Endlage der Führungsbahn befindet. Hierbei wurde der Sekundärriegel bevorzugt mittels eines Anlaufelements daran gehindert aufgrund der Federvorspannung auszuweichen.

Vorzugsweise erstreckt sich der Entnahmebahnabschnitt in Entnahmerichtung des Antriebsakkus.

Gemäß einer bevorzugten Ausführung des Elektrofahrrads ist die Führungsbahn abschnittsweise dreieckig und weist einen vertikalen Führungsbahnbereich sowie einen unteren Übergangsbereich sowie einen oberen Übergabebereich auf.

Bei einer alternativen Variante der Erfindung ist die Führungsbahn zumindest abschnittsweise etwa W-förmig ausgeführt. Vorzugsweise ist die Führungsbahn als Herzkurve, insbesondere als inverse Herzkurve ausgebildet.

Vorzugsweise ist der Sekundärriegel in Richtung des Übergabebereichs kraftbeaufschlagt.

Bevorzugt ist der Sekundärriegel in Richtung des Übergabebereichs mittels der Kraft zumindest eines elastischen Elements, vorzugsweise einer Feder beaufschlagt.

Bei einer alternativen bevorzugten Ausführungsvariante ist die Führungsbahn verschwenkbar angeordnet. Vorzugsweise ist die Führungsbahn einem um einen Drehpunkt verschwenkbaren, federkraftbeaufschlagten Verriegelungselement zugeordnet.

Die Führungsbahn ist bei einer bevorzugten Ausgestaltungsform des Elektrofahrrads neben einer Eingriffsstelle des Schlosses angeordnet.

Bei einem besonders bevorzugten Ausführungsbeispiel ist die Führungsbahn dem Antriebsakku zugeordnet.

Der Antriebsakku weist vorzugsweise einen verschwenkbar im Fahrradrahmen einsetzbaren Endabschnitt auf, wobei die Führungsbahn an einem dem verschwenkbaren Endabschnitt gegenüberliegenden Endabschnitt ausgebildet ists.

Alternativ ist die Führungsbahn vorzugsweise rahmenseitig ausgebildet.

Gemäß einer bevorzugten Ausführung des Elektrofahrrads ist der Antriebsakku in eine Unterseite des Unterrohrs einschwenkbar. Der Antriebsakku ist vorzugsweise vollständig in das Rahmenrohr, beispielsweise das Unterrohr einschwenkbar.

Eine erfindungsgemäße Antriebsakkuanordnung für ein Elektrofahrrad mit einem Fahrradrahmen und einem an diesem festlegbaren Antriebsakku hat eine Primärverriegelung des Antriebsakkus am Rahmen mittels eines Schlosses, wobei der Antriebsakku nach Betätigung des Schlosses in eine Zwischenposition bewegbar ist, und mit einer Sekundärverriegelung welche den Antriebsakku in der Zwischenposition fixiert. Erfindungsgemäß ist die Sekundärverriegelung zur Entnahme des Antriebsakkus mittels einer Relativbewegung des Antriebsakkus relativ zum Fahrradrahmen in eine Entnahmeposition betätigbar und dadurch entriegelbar.

Besonders vorteilhaft ist die erfindungsgemäße Akkuanordnung zur universellen Montage an unterschiedlich ausgebildeten Fahrradrahmen geeignet.

Weitere bevorzugte Ausführungsformen sind Gegenstand der Unteransprüche.

Im Folgenden werden drei bevorzugte Ausführungsformen der vorliegenden Erfindung unter Bezugnahme auf die beiliegenden Zeichnungen näher erläutert. Dabei zeigen die Zeichnungen im Einzelnen:
Figur 1 eine Seitenansicht von links eines erfindungsgemäßen Elektrofahrrads im Bereich des Antriebsakkus;
Figur 2 eine perspektivische Darstellung des Elektrofahrrads aus Figur 1 im Bereich des Antriebsakkus;
Figur 3 eine weitere perspektivische Darstellung des Elektrofahrrads aus Figur 1 im Bereich des Antriebsakkus;
Figur 4 eine Einzeldarstellung der Endplatte des Antriebsakkus;
Figur 5 eine Seitenansicht von links eines erfindungsgemäßen Elektrofahrrads im Bereich des Antriebsakkus in Zwischenstellung;
Figur 6 eine perspektivische Darstellung des Elektrofahrrads aus Figur 5 im Bereich des Antriebsakkus in Zwischenstellung;
Figur 7 eine weitere perspektivische Darstellung des Elektrofahrrads aus Figur 5 im Bereich des Antriebsakkus in Zwischenstellung;
Figur 8 eine Einzeldarstellung der Endplatte des Antriebsakkus in Zwischenstellung;
Figur 9 eine Seitenansicht von links eines erfindungsgemäßen Elektrofahrrads im Bereich des Antriebsakkus in Entnahmeposition;
Figur 10 eine perspektivische Darstellung des Elektrofahrrads aus Figur 9 im Bereich des Antriebsakkus in Entnahmeposition;
Figur 11 eine weitere perspektivische Darstellung des Elektrofahrrads aus Figur 9 im Bereich des Antriebsakkus in Entnahmeposition;
Figur 12 eine Einzeldarstellung der Endplatte des Antriebsakkus in Entnahmeposition;
Figur 13 eine Seitenansicht von links eines erfindungsgemäßen Elektrofahrrads im Bereich des Antriebsakkus während der Akkuentnahme;
Figur 14 eine perspektivische Darstellung des Elektrofahrrads aus Figur 13 im Bereich des Antriebsakkus während der Akkuentnahme;
Figur 15 eine weitere perspektivische Darstellung des Elektrofahrrads aus Figur 13 im Bereich des Antriebsakkus während der Akkuentnahme und
Figur 16 eine Einzeldarstellung einer Endplatte des Antriebsakkus gemäß eines zweiten Ausführungsbeispiels;
Figur 17 eine Einzeldarstellung einer Endplatte des Antriebsakkus gemäß eines dritten Ausführungsbeispiels in vollständig verriegelter Position;
Figur 18 eine Einzeldarstellung der Endplatte aus Figur 17;
Figur 19 eine Einzeldarstellung der Endplatte aus Figur 17 nach dem Entriegeln des Schlosses in einer Zwischenstellung und
Figur 20 eine Einzeldarstellung der Endplatte aus Figur 17 in Entnahmeposition.

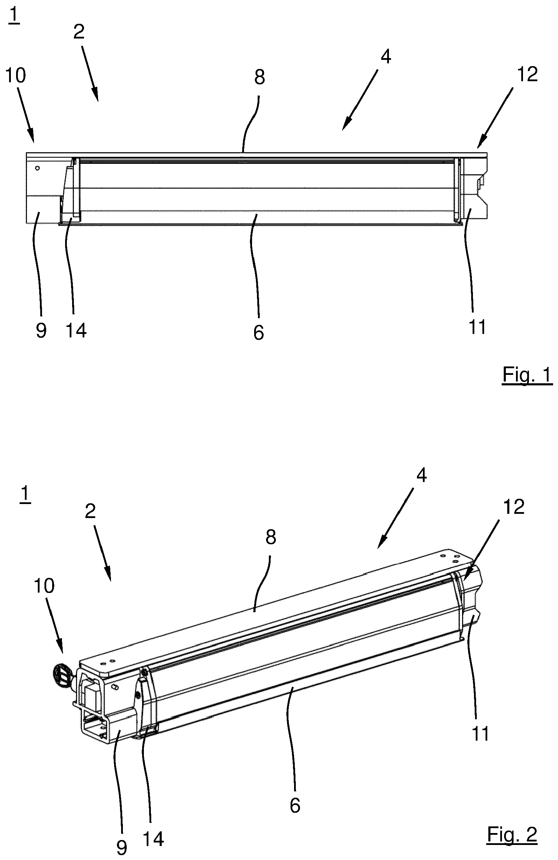

Figur 1 zeigt eine Seitenansicht von links eines erfindungsgemäßen Elektrofahrrads 1 mit einem schematisch dargestellten Fahrradrahmen 2 im Bereich eines in eine rahmenseitige Akkuhalterung 4 eingesetzten Antriebsakkus 6, wobei der Antriebsakku 6 mittels der Akkuhalterung 4 im Fahrradrahmen 2 aufgenommen ist. Die Akkuhalterung 4 hat eine rahmenseitige Montagegrundplatte 8 mit zwei Endabschnitten, wobei an einem Endabschnitt 9 ein Schloss 10 angeordnet ist und am zweiten Endabschnitt 11 ein Einschwenkteil 12 mit elektrischem Kontaktbereich vorgesehen ist. Der Antriebsakkus 6 weist eine stirnseitige Endplatte 14 auf.

Figur 2 zeigt eine perspektivische Darstellung des Elektrofahrrads 1 aus Figur 1 im Bereich des Antriebsakkus 6 mit Akkuhalterung 4.

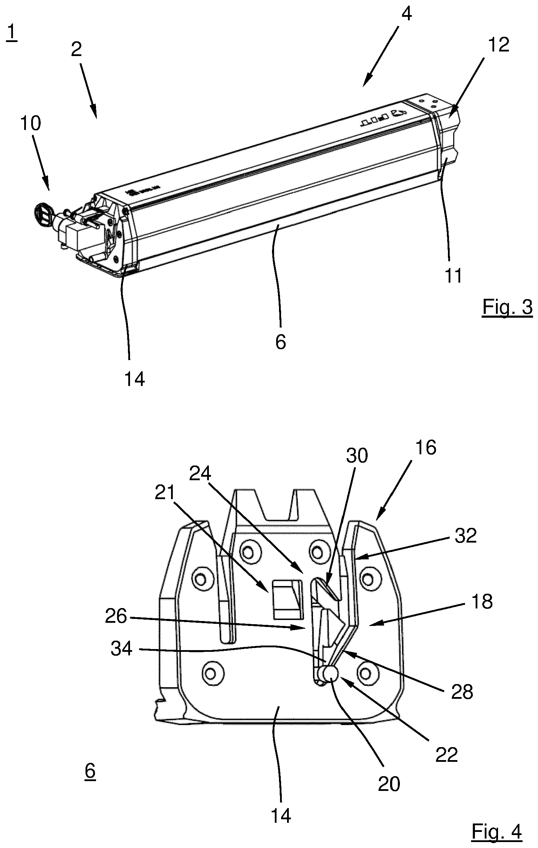

Eine weitere perspektivische Darstellung gemäß Figur 3 zeigt den Antriebsakku 6 ohne Montagegrundplatte 8 mit schematisch dargestelltem Schloss 10 und Einschwenkteil 12.

Eine Primärverriegelung des Antriebsakkus 6 am Fahrradrahmen 2 erfolgt mittels des Schlosses 10. Gemäß den Figuren 1 bis 3 ist der Antriebsakku 6 vollständig eingelegt, mittels Schloss 10 verriegelt und das Elektrofahrrad 1 fahrbereit.

Gemäß Figur 4, welche eine Einzeldarstellung der Endplatte 14 des Antriebsakkus 6 zeigt, ist eine Sekundärverriegelung 16 vorgesehen. Mittels dieser Sekundärverriegelung 16 ist der Antriebsakku 6 in einer Zwischenposition fixierbar. Die Sekundärverriegelung 16 erfolgt mittels eines in einer Führungsbahn 18 bzw. einer Führungskulisse geführten Sekundärriegels 20. Der Sekundärriegel 20 ist als zylinderförmiger Verriegelungsstift ausgeführt. Die Führungsbahn 18 ist eine Herzbahn bzw. Herzkurve und bildet bistabile Positionen für den Sekundärriegel 20 aus. Der Sekundärriegel 20 ist mittels der Kraft einer Feder seitlich in der Führungsbahn 28 bewegbar, so dass dieser den Entnahmebahnabschnitt 32 der Führungsbahn erreichen kann. In der unteren Position ist der Sekundärriegel 20 mittels eines Anlaufelements 34 daran gehindert aufgrund der Federvorspannung nach rechts auszuweichen.

Die Führungsbahn 18 ist neben einer Eingriffsstelle 21 des Schlosses 10 angeordnet. Die Führungsbahn 18 weist eine untere Endlage 22 und eine obere Endlage 24 für den Sekundärriegel 20 auf. Die Führungsbahn 18 ist abschnittsweise dreieckig und hat einen vertikalen Führungsbahnbereich 26, einen unteren Übergangsbereich 28, einen oberen Übergabebereich 30 sowie einen Entnahmebahnabschnitt 32.

Der Sekundärriegel 20 befindet sich bei vollständig verriegeltem, in seiner Betriebsstellung angeordnetem Antriebsakku 6 gemäß den Figuren 1 bis 4 in der unteren Endlage 22 der Führungsbahn 18. Während der Montage eines entnommenen Antriebsakkus wird der Sekundärriegel entlang des Entnahmebahnabschnitt 32 sowie des unteren Übergangsbereichs 28 der Führungsbahn 18 in diese untere Endlage 22 bewegt.

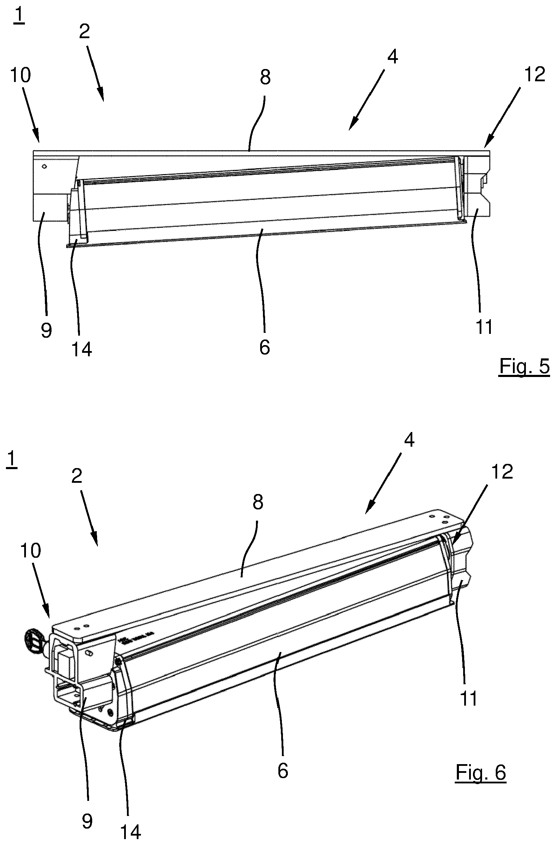

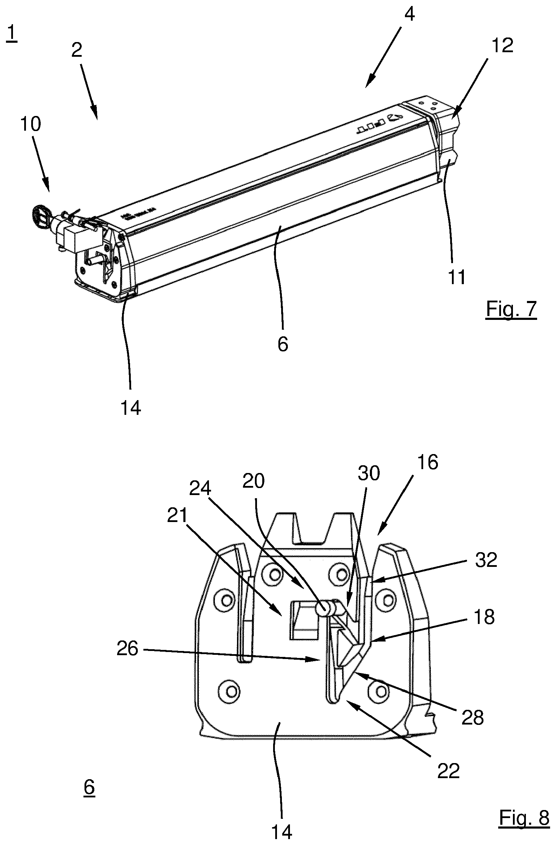

Gemäß den Figur 5 bis 8, welche eine Seitenansicht und zwei perspektivische Darstellungen des Akkubereichs sowie eine Detaildarstellung der Endplatte 14 zeigen, ist der Antriebsakku 6 nach Betätigung des Schlosses 10 in eine Zwischenposition bewegt. Mittels der Sekundärverriegelung 16 ist der Antriebsakku 6 in der Zwischenposition fixiert. Gemäß Figur 8 ist der Sekundärriegel 20 in dieser Zwischenposition hierzu in der oberen Endlage 24 der Führungsbahn 18 formschlüssig gehalten.

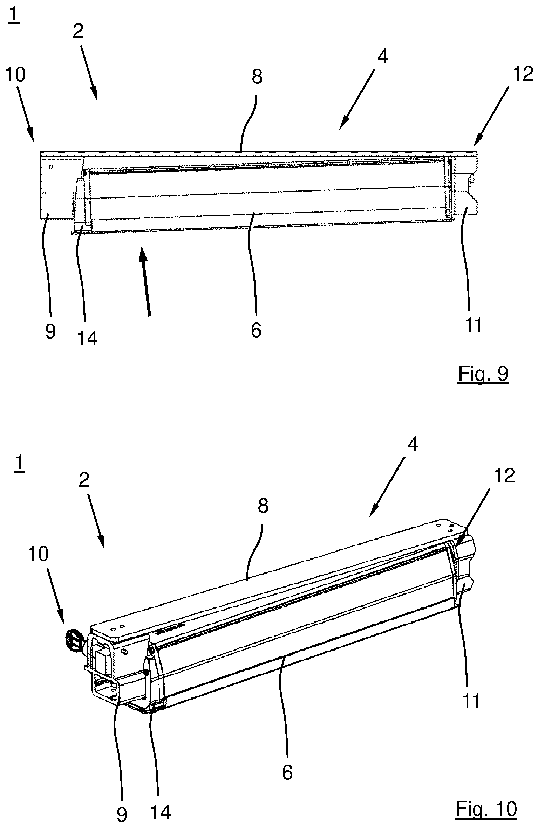

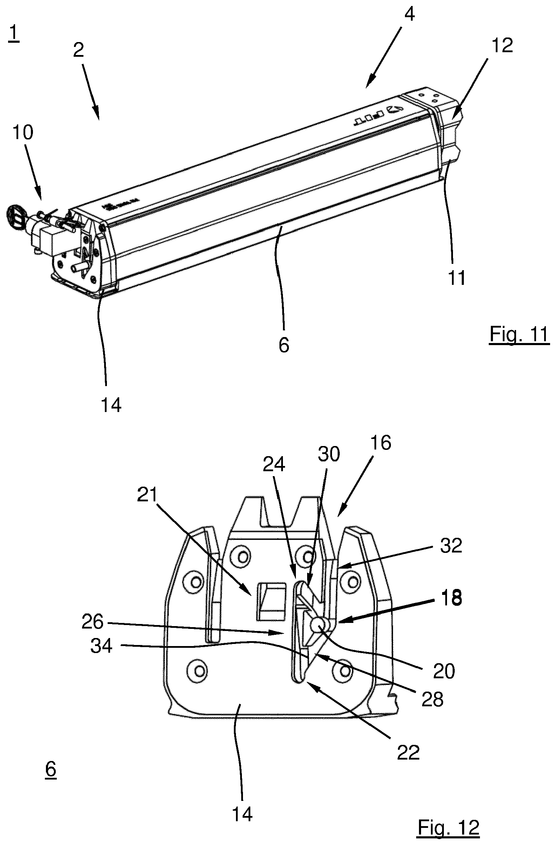

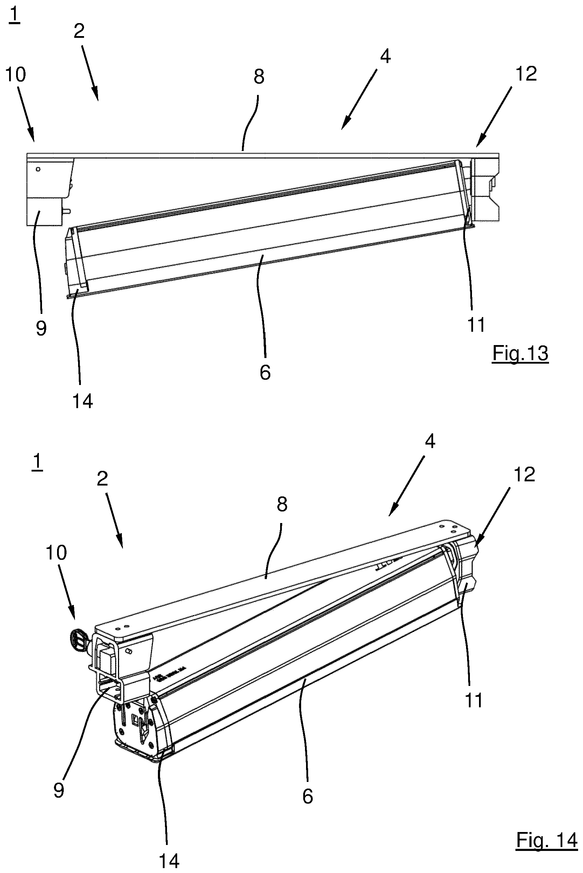

Wie den Figur 9 bis 12 zu entnehmen ist, welche eine Seitenansicht und zwei perspektivische Darstellungen des Akkubereichs sowie eine Detaildarstellung der Endplatte 14 zeigen, ist die Sekundärverriegelung 16 zur Entnahme des Antriebsakkus 6 mittels einer Relativbewegung des Antriebsakkus 6 relativ zum Fahrradrahmen 2 in eine Entnahmeposition betätigbar. Die Entriegelung der Sekundärverriegelung 16 erfolgt nach Betätigung der Primärverriegelung, d. h. des Schlosses 10 mittels einer Bewegung des Antriebsakkus 6 vom Fahrer entgegen seiner Entnahmerichtung (in Pfeilrichtung). Hierbei wird der Antriebsakku 6 vom Fahrer aus der Zwischenstellung teilweise zurück in den Fahrradrahmen 2 bewegt. Der Sekundärriegel 20 ist mittels Federkraft seitlich in der Führungsbahn 28 bewegbar, so dass dieser hierbei den Entnahmebahnabschnitt 32 der Führungsbahn erreicht. Hierbei wurde der Sekundärriegel 20 mittels eines Anlaufelements 34 daran gehindert aufgrund der Federvorspannung nach rechts auszuweichen. Dadurch ist die Sekundärverriegelung 16 entriegelt und der Antriebsakku 6 kann entnommen werden. Der Antriebsakku 6 ist nun vollständig entriegelt und kann vom Fahrradrahmen 2 entnommen bzw. abgenommen werden. Vorteilhaft ist hierbei, dass der Antriebsakku 6 mit einer Hand entnehmbar ist. Dies ist in den Figuren 13 bis 15 dargestellt.

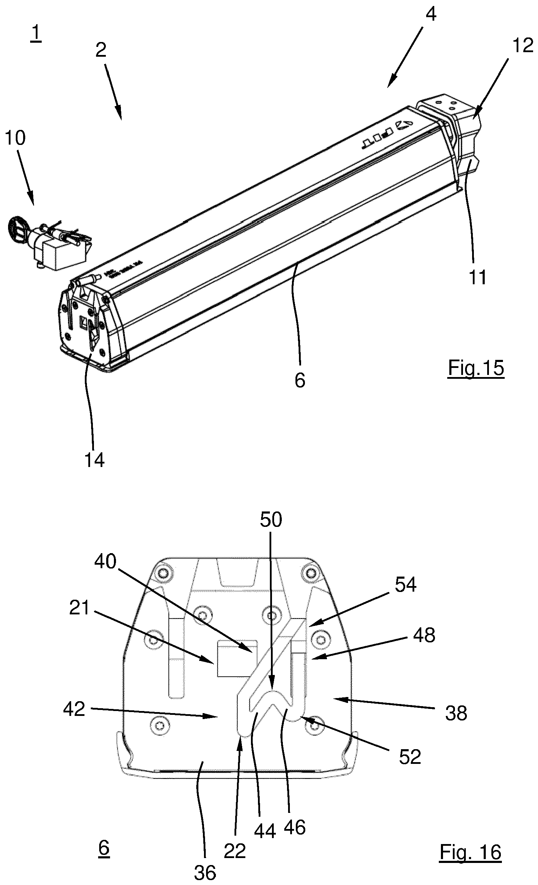

Bei einer gemäß Figur 16 dargestellten alternativen Endplatte 36 eines zweiten Ausführungsbeispiels der Erfindung ist eine Führungsbahn 38 zumindest abschnittsweise etwa W-förmig ausgeführt. Die Führungsbahn 38 ist hierbei als inverse Herzkurve ausgebildet. Die Führungsbahn 38 weist einen Einführungsbahnabschnitt 40, einen dazu angewinkelten Übergabebereich 42 mit zwei Übergabebahnabschnitten 44, 46 sowie einen Entnahmebahnabschnitt 48 auf. Der rahmenseitige Sekundärriegel (nicht dargestellt) ist in Richtung des Übergabebereichs 42 mittels der Kraft einer Feder beaufschlagt, so dass der Antriebsakku 6 in eine Zwischenposition und nach einer Relativbewegung des Antriebsakkus 6 in eine Entnahmeposition bewegbar ist. In der vollständig verriegelten Position befindet sich der Sekundärriegel in der untere Endlage 22. In der Zwischenposition befindet sich der Sekundärriegel in einer stabilen Zwischenlage 50. Nach der Relativbewegung des Antriebsakkus 6 ist der Sekundärriegel federvorgespannt in eine Entnahmelage 52 bewegt, so dass er sich zur Akkuentnahme entlang des Entnahmebahnabschnitts 48 frei bewegen kann. Während dem Akkueinlegen bewegt sich der Sekundärriegel über den Einführungsbahnabschnitt 40 in seine untere Endlage 22. Mittels eines Anlaufhindernisses 54 wird verhindert, dass sich der Sekundärriegel während dem Akkueinlegen in den Entnahmebahnabschnitt 48 bewegt.

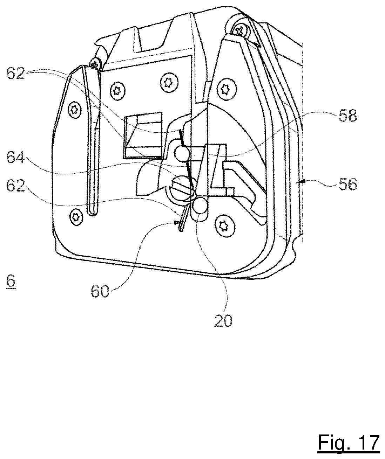

Bei einer gemäß den Figur 17 bis 20 dargestellten Endplatte 56 eines dritten Ausführungsbeispiels der Erfindung ist die Führungsbahn 58 drehbar angeordnet.

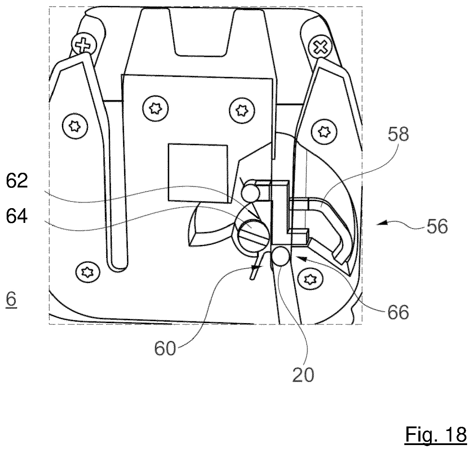

Die Figuren 17 und 18 zeigen jeweils eine Einzeldarstellung der Endplatte 56 des Antriebsakkus 6 in vollständig verriegelter Position. Der Sekundärriegel 20 wurde beim Verriegeln des Antriebsakkus 6 über ein Hindernis bewegt und ist in eine untere Anschlagposition 60 gebracht.

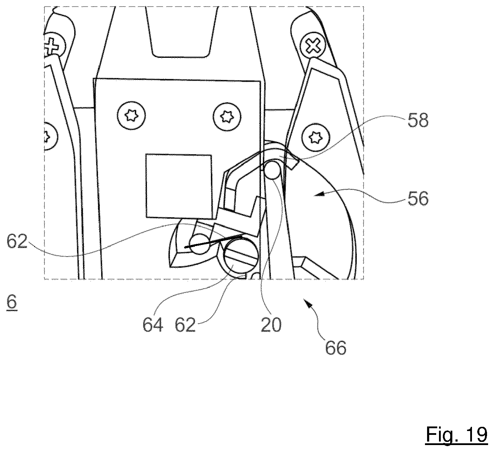

Figur 19 zeigt eine Einzeldarstellung der Endplatte 56 nach dem Entriegeln des Schlosses. Nach dem Entriegeln des Antriebsakkus 6 wird das mittels einer zweischenkligen Schenkelfeder 62 federgeführte drehbare Verriegelungselement (Führungsbahn) 56 mit Drehpunkt 64 nach links entgegen der Federkraft in einer Zwischenstellung 66 gedreht. Der Sekundärriegel 20 wurde in eine Zwischenstellung 66 gebracht, wobei der Antriebsakku 6 gesichert ist und nicht herausfallen kann.

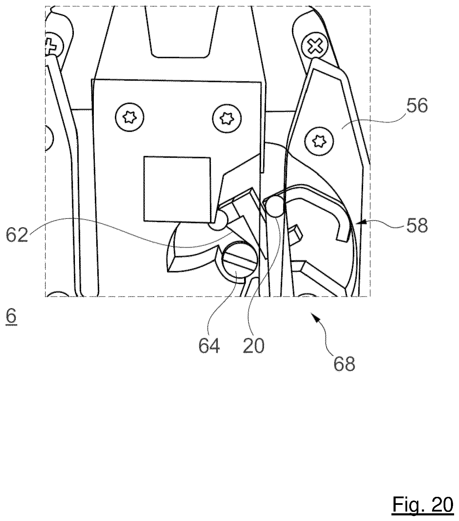

Durch eine Relativbewegung des Antriebsakkus 6 in den Rahmen wird die Kraft auf das drehbare Verriegelungselement (Führungsbahn) 58 gelöst und diese dreht sich zurück, wie im Folgenden gemäß Figur 20 erläutert.

Figur 20 zeigt eine Einzeldarstellung der Endplatte 56 in Entnahmeposition, in welcher sich der Sekundärriegel 20 in der Entriegelungsposition 68 befindet. Anzumerken ist bei diesem Ausführungsbeispiel, dass die Federkraft aufgrund des Akkugewichts nicht von sich aus den Sekundärriegel 20 in die Entriegelungsposition 68 schieben kann. Der Nutzer muss dazu den Antriebsakku 6 anheben.

Offenbart ist ein Elektrofahrrad 1 mit einem Fahrradrahmen 2 und einem an diesem festlegbaren Antriebsakku 6, wobei eine Primärverriegelung des Antriebsakkus 6 am Rahmen 2 mittels eines Schlosses 10 erfolgt, wobei der Antriebsakku 6 nach Betätigung des Schlosses 10 in eine Zwischenposition bewegbar ist, und mit einer Sekundärverriegelung 16 welche den Antriebsakku 6 in der Zwischenposition fixiert. Erfindungsgemäß ist die Sekundärverriegelung 16 zur Entnahme des Antriebsakkus 6 mittels einer Relativbewegung des Antriebsakkus 6 relativ zum Fahrradrahmen 2 in eine Entnahmeposition betätigbar. Weiterhin offenbart ist eine Antriebsakkuanordnung für ein Elektrofahrrad 1.

Des Weiteren sind weitere Ausgestaltungen denkbar wie im Folgenden angegeben:
Elektrofahrrad, wobei die Führungsbahn 18, 38, 58 bistabile Positionen für den Sekundärriegel 20 ausbildet.
Elektrofahrrad, wobei sich ein Entnahmebahnabschnitt 32, 48 in Entnahmerichtung des Antriebsakkus 6 erstreckt.
Elektrofahrrad, wobei der Sekundärriegel 20 in Richtung des Übergabebereichs 30 kraftbeaufschlagt ist.
Elektrofahrrad, wobei der Sekundärriegel 20 in Richtung des Übergabebereichs 30 mittels der Kraft zumindest eines elastischen Elements, vorzugsweise einer Feder beaufschlagt ist.
Elektrofahrrad, wobei die Führungsbahn 18, 38, 58 neben einer Eingriffsstelle 21 des Schlosses 10 angeordnet ist. Elektrofahrrad, wobei die Führungsbahn 18, 38, 58 dem Antriebsakku 6 zugeordnet ist.
Elektrofahrrad, wobei der Antriebsakku 6 einen verschwenkbar im Fahrradrahmen 2 einsetzbaren Endabschnitt aufweist und die Führungsbahn 18, 38, 58 an einem dem verschwenkbaren Endabschnitt gegenüberliegenden Endabschnitt ausgebildet ist.
Elektrofahrrad, wobei die Führungsbahn rahmenseitig ausgebildet ist.
Elektrofahrrad, wobei der Antriebsakku 6 in eine Unterseite des Unterrohrs einschwenkbar ist.

### Bezugszeichenliste

- 1: Elektrofahrrad
- 2: Fahrradrahmen
- 4: Akkuhalterung
- 6: Antriebsakku
- 8: Montagegrundplatte
- 9: Endabschnitt
- 10: Schloss
- 11: Endabschnitt
- 12: Einschwenkteil
- 14: Endplatte
- 16: Sekundärverriegelung
- 18: Führungsbahn
- 20: Sekundärriegel
- 21: Eingriffsstelle
- 22: untere Endlage
- 24: obere Endlage
- 26: vertikaler Führungsbahnbereich
- 28: unterer Übergangsbereich
- 30: oberer Übergabebereich
- 32: Entnahmebahnabschnitt
- 34: Anlaufelement
- 36: Endplatte
- 38: Führungsbahn
- 40: Einführungsbahnabschnitt
- 42: Übergabebereich
- 44: Übergabebahnabschnitt
- 46: Übergabebahnabschnitt
- 48: Entnahmebahnabschnitt
- 50: Zwischenlage
- 52: Entnahmelage
- 54: Anlaufhindernis
- 56: Endplatte
- 58: Führungsbahn
- 60: Anschlagposition
- 62: Feder
- 64: Drehpunkt
- 66: Zwischenstellung
- 68: Entriegelungsposition

## Patentansprüche

1. Elektrofahrrad (1) mit einem Fahrradrahmen (2) und einem an diesem festlegbaren Antriebsakku (6), wobei eine Primärverriegelung des Antriebsakkus (6) am Fahrradrahmen (2) mittels eines Schlosses (10) erfolgt, wobei der Antriebsakku (6) nach Betätigung des Schlosses (10) in eine Zwischenposition bewegbar ist, und mit einer Sekundärverriegelung (16) welche den Antriebsakku (6) in der Zwischenposition fixiert, **dadurch gekennzeichnet, dass** die Sekundärverriegelung (16) zur Entnahme des Antriebsakkus (6) mittels einer Relativbewegung des Antriebsakkus (6) relativ zum Fahrradrahmen (2) in eine Entnahmeposition betätigbar ist.

2. Elektrofahrrad nach Anspruch 1, wobei die Sekundärverriegelung (16) mittels zumindest eines in einer Führungsbahn (18, 38, 58) geführten Sekundärriegels (20) erfolgt.

3. Elektrofahrrad nach Anspruch 1 oder 2, wobei die Entriegelung der Sekundärverriegelung (16) mittels einer Bewegung des Antriebsakkus (6) entgegen seiner Entnahmerichtung erfolgt.

4. Elektrofahrrad nach Anspruch 1 oder 2, wobei die Entriegelung der Sekundärverriegelung mittels einer Bewegung des Antriebsakkus (6) in Entnahmerichtung erfolgt.

5. Elektrofahrrad nach einem der vorhergehenden Ansprüche, wobei die Führungsbahn (18, 38, 58) als Führungsschlitz oder taschenförmige Nut ausgebildet ist.

6. Elektrofahrrad nach einem der Ansprüche 2 bis 5, wobei der Sekundärriegel (20) einen zumindest abschnittsweise zylinderförmigen Verriegelungsstift aufweist.

7. Elektrofahrrad nach einem der Ansprüche 2 bis 6, wobei die Führungsbahn (18) eine untere Endlage (22) und eine obere Endlage (24) für den Sekundärriegel (20) aufweist.

8. Elektrofahrrad nach einem der Ansprüche 2 bis 7, wobei sich der Sekundärriegel (20) bei vollständig verriegeltem, in seiner Betriebsstellung angeordnetem Antriebsakku (6) in der unteren Endlage (22) der Führungsbahn (18, 38, 58) befindet.

9. Elektrofahrrad nach einem der Ansprüche 7 oder 8, wobei der Antriebsakku (6) nach dem Öffnen des Schlosses (10) in eine Zwischenposition bewegt ist, in welcher sich der Sekundärriegel (20) in der oberen Endlage (24) der Führungsbahn (18) befindet.

10. Elektrofahrrad nach einem der Ansprüche 2 bis 9, wobei der Sekundärriegel (20) mittels einer Bewegung des Antriebsakkus (6) relativ zu der Zwischenposition in eine Entnahmeposition der Führungsbahn (18, 38, 58) bewegbar ist.

11. Elektrofahrrad nach einem der Ansprüche 2 bis 10, wobei der Sekundärriegel (20) aufgrund einer Kraftbeaufschlagung, vorzugsweise mittels der Kraft zumindest eines elastischen Elements, besonders bevorzugt einer Feder, seitlich in der Führungsbahn (18, 38) bewegbar ist.

12. Elektrofahrrad nach einem der Ansprüche 2 bis 11, wobei die Führungsbahn (18) abschnittsweise etwa dreieckig ist und einen vertikalen Führungsbahnbereich (26), einen unteren Übergangsbereich (28) sowie einen oberen Übergabebereich (30) aufweist.

13. Elektrofahrrad nach einem der Ansprüche 2 bis 11, wobei die Führungsbahn (38) zumindest abschnittsweise etwa W-förmig ist.

14. Elektrofahrrad nach einem der Ansprüche 2 bis 10, wobei die Führungsbahn (58) verschwenkbar ist.

15. Antriebsakkuanordnung für ein Elektrofahrrad (1) mit einem Fahrradrahmen (2) und einem an diesem festlegbaren Antriebsakku (6), wobei eine Primärverriegelung des Antriebsakkus (6) am Fahrradrahmen (2) mittels eines Schlosses (10) erfolgt, wobei der Antriebsakku (6) nach Betätigung des Schlosses (10) in eine Zwischenposition bewegbar ist, und mit einer Sekundärverriegelung (16) welche den Antriebsakku (6) in der Zwischenposition fixiert, **dadurch gekennzeichnet, dass** die Sekundärverriegelung (16) zur Entnahme des Antriebsakkus (6) mittels einer Relativbewegung des Antriebsakkus (6) relativ zum Fahrradrahmen (2) in eine Entnahmeposition betätigbar ist.
